# EUROPÄISCHE PATENTANMELDUNG

(11) **EP 4 016 405 A1**
(43) Veröffentlichungstag der Anmeldung: **22.06.2022**
(21) Anmeldenummer: 20215420.9
(22) Anmeldetag: 18.12.2020
(51) Int. Cl.: G06Q 10/00

(54) **VERFAHREN UND SYSTEM ZUM ERMITTELN EINER INFORMATION BETREFFEND EINE ABHOLUNG, EINEN ANFANG UND/ODER EIN ENDE EINES WERKSTATT- UND/ODER LAGERAUFENTHALTS UND/ODER EINE AUSLIEFERUNG EINES GRÜN- UND/ODER KULTURFLÄCHENBEARBEITUNGSGERÄTS**

(71) Anmelder: Andreas Stihl AG & Co. KG, 71336 Waiblingen (DE)
(72) Erfinder: Böker, Robert, 71336 Waiblingen (DE)
(74) Vertreter: Patentanwälte Ruff, Wilhelm, Beier, Dauster & Partner mbB

(57) **Zusammenfassung**

Die Erfindung bezieht sich auf ein Verfahren zum Ermitteln einer Information (Info) betreffend eine Abholung, einen Anfang und/oder ein Ende eines Werkstatt- und/oder Lageraufenthalts und/oder eine Auslieferung eines Grün- und/oder Kulturflächenbearbeitungsgeräts (1), wobei das Verfahren die Schritte aufweist:
a) Bereitstellen einer Wachstumskenngröße (WG), wobei die Wachstumskenngröße (WG) für ein Pflanzenwachstum (PW) auf und/oder in einer mittels des Grün- und/oder Kulturflächenbearbeitungsgeräts (1) bearbeiteten und/oder zu bearbeitenden Fläche (100) kennzeichnend ist, und
b) Ermitteln der Information (Info) in Abhängigkeit von der bereitgestellten Wachstumskenngröße (WG).

## Beschreibung

### ANWENDUNGSGEBIET UND STAND DER TECHNIK

Die Erfindung bezieht sich auf ein Verfahren und ein System, insbesondere jeweils, zum Ermitteln einer Information betreffend eine Abholung, einen Anfang und/oder ein Ende eines Werkstatt- und/oder Lageraufenthalts und/oder eine Auslieferung eines Grün- und/oder Kulturflächenbearbeitungsgeräts.

### AUFGABE UND LÖSUNG

Der Erfindung liegt als Aufgabe die Bereitstellung eines Verfahrens und eines Systems, insbesondere jeweils, zum Ermitteln einer Information betreffend eine Abholung, einen Anfang und/oder ein Ende eines Werkstatt- und/oder Lageraufenthalts und/oder eine Auslieferung eines Grün- und/oder Kulturflächenbearbeitungsgeräts zugrunde, das, insbesondere jeweils, verbesserte Eigenschaften und/oder verbesserte Funktionalitäten aufweist.

Die Erfindung löst die Aufgabe durch die Bereitstellung eines Verfahrens mit den Merkmalen des Anspruchs 1 und eines Systems mit den Merkmalen des Anspruchs 14. Vorteilhafte Weiterbildungen und/oder Ausgestaltungen der Erfindung sind in den abhängigen Ansprüchen beschrieben.

Das erfindungsgemäße, insbesondere automatische, Verfahren ist zum, insbesondere automatischen, Ermitteln bzw. Auslösen einer Information, insbesondere einer Freigabe-Information, betreffend bzw. für bzw. über eine Abholung, einen Anfang und/oder ein Ende eines Werkstatt- und/oder Lageraufenthalts und/oder eine Auslieferung eines Grün- und/oder Kulturflächenbearbeitungsgeräts ausgebildet bzw. konfiguriert bzw. vorgesehen. Das Verfahren umfasst bzw. weist die Schritte auf: a) Bereitstellen, insbesondere automatisches Bereitstellen, einer Wachstumskenngröße, insbesondere eines Werts der Wachstumskenngröße, insbesondere wiederholt bzw. regelmäßig bzw. in regelmäßigen Zeitabständen. Die Wachstumskenngröße ist für ein Pflanzenwachstum, insbesondere einen Wert des Pflanzenwachstums, auf und/oder in einer mittels des Grün- und/oder Kulturflächenbearbeitungsgeräts bearbeiteten und/oder zu bearbeitenden Fläche, insbesondere Grün- und/oder Kulturfläche, kennzeichnend bzw. charakteristisch bzw. beschreibend, insbesondere kennzeichnet bzw. charakterisiert bzw. beschreibt das Pflanzenwachstum. b) Ermitteln, insbesondere automatisches Ermitteln, bzw. Bestimmen der Information, insbesondere eines Werts der Information, in Abhängigkeit von bzw. basierend auf der bereitgestellten Wachstumskenngröße, insbesondere wiederholt bzw. regelmäßig bzw. in regelmäßigen Zeitabständen.

Dies ermöglicht ein, insbesondere jeweils, optimales Timing bzw. einen, insbesondere jeweils, richtigen Zeitpunkt der Abholung, des Anfangs und/oder des Endes des Werkstatt- und/oder Lageraufenthalts und/oder der Auslieferung des Grün- und/oder Kulturflächenbearbeitungsgeräts, insbesondere angepasst an das Pflanzenwachstum.

Zusätzlich oder alternativ ermöglicht dies eine optimale Nutzung einer, insbesondere jeweiligen und/oder begrenzten, Kapazität eines Hol- und/oder Lieferservice und/oder eines Werkstatt- und/oder Lagerbetreibers. Insbesondere dies vor dem Hintergrund, dass in der Regel ein jeweiliges Pflanzenwachstum auf und/oder in mittels Grün- und/oder Kulturflächenbearbeitungsgeräten bearbeiteten und/oder zu bearbeitenden Flächen, insbesondere an verschiedenen Orten bzw. regional verschieden, insbesondere zeitlich, verschieden ist, insbesondere endet und/oder anfängt, insbesondere im Jahr. Somit sind in der Regel die Abholungen, die Anfänge und/oder die Enden der Werkstatt- und/oder Lageraufenthalte und/oder die Auslieferungen der Grün- und/oder Kulturflächenbearbeitungsgeräte zu verschiedenen Daten bzw. Zeitpunkten bzw., insbesondere zeitlich, verschieden bzw. verteilt. Somit ermöglicht dies eine Effizienzsteigerung des Hol- und/oder Lieferservice und/oder des Werkstatt- und/oder Lagerbetreibers.

Insbesondere können/kann die Abholung und/oder die Auslieferung des Grün- und/oder Kulturflächenbearbeitungsgeräts als Transport bezeichnet werden. Zusätzlich oder alternativ kann die Abholung von der Fläche und/oder zu einer Werkstatt und/oder einem Lager, insbesondere für den Werkstatt- und/oder Lageraufenthalt, sein. Weiter zusätzlich oder alternativ kann die Auslieferung von einer, insbesondere der, Werkstatt und/oder einem, insbesondere dem, Lager, insbesondere für den Werkstatt- und/oder Lageraufenthalt, und/oder zu der Fläche sein. Weiter zusätzlich oder alternativ kann eine, insbesondere die, Werkstatt und/oder ein, insbesondere das, Lager bzw. der Werkstatt- und/oder Lageraufenthalt nicht in einem Bereich bzw. entfernt von der Fläche sein. Weiter zusätzlich oder alternativ kann der Werkstatt- und/oder Lageraufenthalt mehrere Tage, insbesondere Wochen, insbesondere zeitlich, dauern. Weiter zusätzlich oder alternativ kann der Werkstatt- und/oder Lageraufenthalt eine Reinigung, eine Wartung und/oder eine Reparatur und/oder eine Einlagerung und/oder eine Auslagerung des Grün- und/oder Kulturflächenbearbeitungsgeräts aufweisen bzw. umfassen.

Das Grün- und/oder Kulturflächenbearbeitungsgerät kann eine Masse von maximal 200 kg (Kilogramm), insbesondere maximal 100 kg, insbesondere maximal 50 kg, insbesondere maximal 20 kg, und/oder minimal 1 kg, insbesondere minimal 2 kg, insbesondere minimal 5 kg, insbesondere minimal 10 kg, aufweisen. Zusätzlich oder alternativ kann das Grün- und/oder Kulturflächenbearbeitungsgerät ein boden- und/oder handgeführtes Grün- und/oder Kulturflächenbearbeitungsgerät sein. Weiter zusätzlich oder alternativ kann das Grün- und/oder Kulturflächenbearbeitungsgerät ein Garten- und/oder Bodenbearbeitungsgerät sein. Weiter zusätzlich oder alternativ kann das Grün- und/oder Kulturflächenbearbeitungsgerät einen Antrieb, insbesondere einen Werkzeugantrieb, aufweisen. Insbesondere kann der Antrieb einen Elektromotorantrieb und/oder einen Verbrennungsmotorantrieb aufweisen, insbesondere sein. Weiter zusätzlich oder alternativ kann das Grün- und/oder Kulturflächenbearbeitungsgerät ein Bearbeitungswerkzeug, insbesondere antreibbar durch den Werkzeugantrieb, zur Bearbeitung der Fläche aufweisen.

Die Fläche kann eine Freifläche, insbesondere ein unversiegelter Boden, oder eine Grünfläche sein, wie eine Wiese oder eine Rasen- bzw. Grasfläche.

Das Pflanzenwachstum kann ein Wachstum bzw. eine Zunahme einer Größe einer Pflanze, insbesondere einer Grün- und/oder Kulturpflanze, insbesondere einer Graspflanze, sein.

Der Schritt b) kann aufweisen: Ermitteln des Pflanzenwachstums in Abhängigkeit von bzw. basierend auf der Wachstumskenngröße, insbesondere mittels eines Pflanzenwachstumsmodells, und Ermitteln der Information in Abhängigkeit von dem ermittelten Pflanzenwachstum. Insbesondere kann das Pflanzenwachstumsmodell eine Tabelle, eine mathematische Formel, eine auf Erfahrungswerten basierende Abschätzung und/oder eine Simulation aufweisen.

Der Schritt b) kann zeitlich nach dem Schritt a) ausgeführt werden.

In einer Weiterbildung der Erfindung umfasst bzw. weist das Verfahren den Schritt auf: c) Übertragen, insbesondere automatisches Übertragen, und/oder Ausgeben, insbesondere automatisches Ausgeben, der ermittelten Information, insbesondere an einen, insbesondere den, Hol- und/oder Lieferservice des Grün- und/oder Kulturflächenbearbeitungsgeräts bzw. ein, insbesondere elektrisches, Service-Endgerät des Hol- und/oder Lieferservice und/oder mittels des Service-Endgeräts, einen, insbesondere den, Werkstatt- und/oder Lagerbetreiber des Grün- und/oder Kulturflächenbearbeitungsgeräts bzw. ein, insbesondere elektrisches, Betreiber-Endgerät des Werkstatt- und/oder Lagerbetreibers und/oder mittels des Betreiber-Endgeräts und/oder einen Nutzer bzw. Endkunden bzw. Betreiber des Grün- und/oder Kulturflächenbearbeitungsgeräts bzw. ein, insbesondere elektrisches, Nutzer-Endgerät des Nutzers und/oder mittels des Nutzer-Endgeräts, insbesondere bei einer Änderung der Information. Dies ermöglicht ein Wahrnehmen der Information. Zusätzlich oder alternativ ermöglicht dies eine Effizienzsteigerung des Hol- und/oder Lieferservice und/oder des Werkstatt- und/oder Lagerbetreibers und/oder eine hohe Nutzerfreundlichkeit. Insbesondere kann der Schritt c) zeitlich nach dem Schritt b) ausgeführt werden. Zusätzlich oder alternativ kann das Übertragen drahtlos und/oder drahtgebunden sein. Weiter zusätzlich oder alternativ kann das Ausgeben optisch, akustisch und/oder haptisch sein. Weiter zusätzlich oder alternativ kann das Übertragen und/oder das Ausgeben an den Hol- und/oder Lieferservice und/oder den Werkstatt- und/oder Lagerbetreiber durch den Nutzer, insbesondere standardmäßig bzw. pauschal, vorgegeben bzw. eingegeben bzw. freigegeben sein.

In einer Ausgestaltung der Erfindung umfasst bzw. weist das Verfahren, insbesondere den Schritt, auf: Freigeben, insbesondere automatisches Freigeben, Verzögern, insbesondere automatisches Verzögern, und/oder Sperren, insbesondere automatisches Sperren, des Übertragens und/oder des Ausgebens der ermittelten Information an den Hol- und/oder Lieferservice bzw. das Service-Endgerät und/oder mittels des Service-Endgeräts und/oder den Werkstatt- und/oder Lagerbetreiber bzw. das Betreiber-Endgerät und/oder mittels des Betreiber-Endgeräts in Abhängigkeit von einer Eingabe bzw. Vorgabe durch den Nutzer bzw. das Nutzer-Endgerät, insbesondere zeitlich nach dem Übertragen und/oder dem Ausgeben der ermittelten Information an den Nutzer bzw. das Nutzer-Endgerät und/oder mittels des Nutzer-Endgeräts. Dies ermöglicht eine Berücksichtigung von, insbesondere nur, dem Nutzer Bekanntem, insbesondere und dem Hol- und/oder Lieferservice und/oder dem Werkstatt- und/oder Lagerbetreiber Unbekanntem. Insbesondere kann dies, insbesondere dieser Schritt, durch den Nutzer, insbesondere manuell, vorgegeben bzw. eingegeben sein. Zusätzlich oder alternativ kann das Verzögern um mehrere Tage, insbesondere Wochen, sein.

In einer Weiterbildung der Erfindung umfasst bzw. weist der Schritt b) auf: Ermitteln der Information betreffend die Abholung und/oder den Anfang des Werkstatt- und/oder Lageraufenthalts, falls die bereitgestellte Wachstumskenngröße für eine Unterschreitung eines Wachstumsgrenzwerts durch das Pflanzenwachstum kennzeichnend bzw. charakteristisch bzw. beschreibend ist, insbesondere falls die Wachstumskenngröße und/oder das Pflanzenwachstum den Wachstumsgrenzwert unterschreiten/unterschreitet, insbesondere und andernfalls nicht. Zusätzlich oder alternativ umfasst bzw. weist der Schritt b) auf: Ermitteln der Information betreffend das Ende des Werkstatt- und/oder Lageraufenthalts und/oder die Auslieferung, falls die bereitgestellte Wachstumskenngröße für eine Erreichung und/oder eine Überschreitung eines, insbesondere des, Wachstumsgrenzwerts durch das Pflanzenwachstum kennzeichnend bzw. charakteristisch bzw. beschreibend ist, insbesondere falls die Wachstumskenngröße und/oder das Pflanzenwachstum den Wachstumsgrenzwert erreichen/erreicht und/oder überschreiten/überschreitet, insbesondere und andernfalls nicht. Dies ermöglicht ein, insbesondere jeweils, optimales Timing bzw. einen, insbesondere jeweils, richtigen Zeitpunkt der Abholung und/oder des Anfangs des Werkstatt- und/oder Lageraufenthalts des Grün- und/oder Kulturflächenbearbeitungsgeräts, insbesondere angepasst an ein kleines bzw. niedriges oder kein Pflanzenwachstum bzw. ein Ende des Pflanzenwachstums, insbesondere im Jahr. Zusätzlich oder alternativ ermöglicht dies ein, insbesondere jeweils, optimales Timing bzw. einen, insbesondere jeweils, richtigen Zeitpunkt des Endes des Werkstatt- und/oder Lageraufenthalts und/oder der Auslieferung des Grün- und/oder Kulturflächenbearbeitungsgeräts, insbesondere angepasst an ein großes bzw. hohes Pflanzenwachstum bzw. einen Anfang des Pflanzenwachstums, insbesondere im Jahr. Insbesondere kann der Wachstumsgrenzwert durch einen, insbesondere den, Nutzer des Grün- und/oder Kulturflächenbearbeitungsgeräts bzw. das Nutzer-Endgerät für das Grün- und/oder Kulturflächenbearbeitungsgerät und/oder die Fläche variabel bzw. individuell ein- bzw. vorgebbar sein, insbesondere ein- bzw. vorgegeben sein.

Insbesondere kann das Grün- und/oder Kulturflächenbearbeitungsgerät zum Besäen, Düngen und/oder Wässern der Fläche sein.

In einer Weiterbildung der Erfindung ist das Grün- und/oder Kulturflächenbearbeitungsgerät ein autonomer mobiler Grün- und/oder Kulturflächenbearbeitungsroboter. Zusätzlich oder alternativ ist das Grün- und/oder Kulturflächenbearbeitungsgerät ein Rasenmäher, insbesondere ein autonomer mobiler Rasenmähroboter, und/oder eine Bodenfräse. Insbesondere im Fall des Grün- und/oder Kulturflächenbearbeitungsroboters kann es sein, dass ein, insbesondere der, Nutzer das Pflanzenwachstum nicht überwacht, insbesondere nicht überwachen möchte. Somit kann das Verfahren im Fall des Grün- und/oder Kulturflächenbearbeitungsroboters besonders vorteilhaft sein. Zusätzlich oder alternativ kann ein Rasen- bzw. Gras- und/oder Bodenwachstum regelmäßig abwechselnd klein sein bzw. enden und groß sein bzw. anfangen, insbesondere von Jahr zu Jahr, aber auch am gleichen Ort, insbesondere von Jahr zu Jahr, nicht, insbesondere, zum, insbesondere jeweils, gleichen Datum bzw. Zeitpunkt. Somit kann das Verfahren im Fall des Rasenmähers und/oder der Bodenfräse besonders vorteilhaft sein. Insbesondere kann autonom bedeuten, dass sich der Grün- und/oder Kulturflächenbearbeitungsroboter auf der Fläche selbstständig, selbsttätig, selbstbestimmt, selbstgesteuert und/oder unabhängig von einem, insbesondere dem, Nutzer bewegen und/oder agieren und/oder zumindest einen Parameter, wie insbesondere einen Streckenparameter, und/oder einen Umkehrpunkt auswählen kann. Zusätzlich oder alternativ kann autonom bedeuten, dass der Grün- und/oder Kulturflächenbearbeitungsroboter selbstständig mit einem Bearbeiten anfangen und/oder enden kann. Weiter zusätzlich oder alternativ braucht oder kann beim autonomen Bearbeiten der Grün- und/oder Kulturflächenbearbeitungsroboter nicht durch den Nutzer überwacht und/oder gesteuert zu sein, insbesondere nicht ferngesteuert. In anderen Worten: bei dem autonomen Bearbeiten kann der Grün- und/oder Kulturflächenbearbeitungsroboter ohne menschliche Überwachung und/oder Steuerung und/oder Führung bearbeiten. Weiter zusätzlich oder alternativ kann der Grün- und/oder Kulturflächenbearbeitungsroboter ein Serviceroboter und/oder ein Dienstleistungsroboter sein. Weiter zusätzlich oder alternativ kann der Rasenmäher ein Mulchmäher sein. Weiter zusätzlich oder alternativ kann ein Rasenmähwerkzeug des Rasenmähers mindestens einen Mähfaden, mindestens ein Kunststoffmesser, mindestens ein Metallmesser und/oder ein Metallschneideblatt mit mindestens einer Schneidkante und/oder mit mindestens einem Schneidezahn umfassen. Weiter zusätzlich oder alternativ kann ein, insbesondere das, Rasenmähwerkzeug des Rasenmähers ein rotierendes Rasenmähwerkzeug sein und dazu ausgebildet sein, ein zu mähendes Gut im sogenannten Freischnittverfahren ohne Gegenschneide zu mähen.

In einer Weiterbildung der Erfindung umfasst bzw. weist der Schritt a) auf: Erfassen, insbesondere automatisches Erfassen, der Wachstumskenngröße, insbesondere des Werts der Wachstumskenngröße, mittels eines, insbesondere elektrischen, Wachstumskenngrößen-Sensors in einem, insbesondere dem, Bereich bzw. lokal, insbesondere an und/oder auf und/oder in, der Fläche. Dies ermöglicht eine hohe Kennzeichnungskraft der Wachstumskenngröße. Somit ermöglicht dies ein genaues Ermitteln der Information. Insbesondere kann in dem Bereich der Fläche maximal 200 m (Meter), insbesondere maximal 100 m, insbesondere maximal 50 m, insbesondere maximal 20 m, von der Fläche entfernt bedeuten. Zusätzlich oder alternativ kann der Wachstumskenngrößen-Sensor Teil eines Smart Homes, insbesondere einer Wetterstation des Smart Homes, sein. Weiter zusätzlich oder alternativ kann der Wachstumskenngrößen-Sensor ein Teil einer, insbesondere elektrischen, Ladestation zum, insbesondere elektrischen, Aufladen des Grün- und/oder Kulturflächenbearbeitungsgeräts, insbesondere des Grün- und/oder Kulturflächenbearbeitungsroboters, insbesondere mit Antriebsenergie, und/oder, insbesondere mindestens, an der Ladestation angeordnet, insbesondere befestigt, sein. Weiter zusätzlich oder alternativ kann der Schritt b) aufweisen: Ermitteln der Information in Abhängigkeit von der erfassten Wachstumskenngröße.

In einer Weiterbildung, insbesondere einer Ausgestaltung, der Erfindung umfasst bzw. weist der Schritt a) auf: Erfassen, insbesondere automatisches Erfassen, der Wachstumskenngröße, insbesondere des Werts der Wachstumskenngröße, mittels eines, insbesondere des und/oder elektrischen, Wachstumskenngrößen-Sensors eines, insbesondere des, Grün- und/oder Kulturflächenbearbeitungsgeräts, insbesondere auf und/oder in der Fläche. Dies ermöglicht eine hohe Kennzeichnungskraft der Wachstumskenngröße. Somit ermöglicht dies ein genaues Ermitteln der Information. Insbesondere kann das Erfassen während eines, insbesondere des, Bearbeitens der Fläche ausgeführt werden. Zusätzlich oder alternativ kann der Schritt b) aufweisen: Ermitteln der Information in Abhängigkeit der erfassten Wachstumskenngröße.

In einer Ausgestaltung der Erfindung umfasst bzw. weist der Schritt a) auf: Erfassen der Wachstumskenngröße mittels des Wachstumskenngrößen-Sensors eines weiteren Grün- und/oder Kulturflächenbearbeitungsgeräts, insbesondere auf und/oder in einer weiteren Fläche in dem Bereich der Fläche. Insbesondere umfasst bzw. weist der Schritt b) auf: Ermitteln der Information, insbesondere betreffend das Ende des Werkstatt- und/oder Lageraufenthalts und/oder die Auslieferung, in Abhängigkeit von der erfassten Wachstumskenngröße. Dies ermöglicht, dass das, insbesondere eine, Grün- und/oder Kulturflächenbearbeitungsgerät keinen Wachstumskenngrößen-Sensor aufweisen braucht oder kann und/oder sich, insbesondere noch, in der Werkstatt und/oder dem Lager aufhalten bzw. befinden kann und/oder, insbesondere noch, nicht ausgeliefert sein braucht oder kann. Insbesondere kann ein Werkstatt- und/oder Lageraufenthalt des weiteren Grün- und/oder Kulturflächenbearbeitungsgeräts bereits beendet sein und/oder das weitere Grün- und/oder Kulturflächenbearbeitungsgerät kann bereits ausgeliefert sein. Zusätzlich oder alternativ kann das weitere Grün- und/oder Kulturflächenbearbeitungsgerät als Referenz-Grün- und/oder Kulturflächenbearbeitungsgerät bezeichnet werden. Weiter zusätzlich oder alternativ kann die weitere Fläche als Referenz-Fläche bezeichnet werden. Weiter zusätzlich oder alternativ können das, insbesondere eine, Grün- und/oder Kulturflächenbearbeitungsgerät und das weitere Grün- und/oder Kulturflächenbearbeitungsgerät eines gleichen Typs sein. Weiter zusätzlich oder alternativ können die, insbesondere eine, Fläche, insbesondere Pflanzen auf und/oder in der Fläche, und die weitere Fläche, insbesondere weitere Pflanzen auf und/oder in der weiteren Fläche, einer gleichen Art, insbesondere einer gleichen Sorte, sein.

In einer Ausgestaltung der Erfindung wurde mittels des Wachstumskenngrößen-Sensors des weiteren Grün- und/oder Kulturflächenbearbeitungsgeräts ein, insbesondere größeres, Pflanzenwachstum, insbesondere noch und/oder kurz bzw. für wenige Tage, erfasst, insbesondere zeitlich, nachdem mittels eines, insbesondere elektrischen, Wachstumskenngrößen-Sensors des Grün- und/oder Kulturflächenbearbeitungsgeräts ein kleineres bzw. niedrigeres oder kein Pflanzenwachstum, insbesondere mehr, erfasst wurde. Dies ermöglicht, das weitere Grün- und/oder Kulturflächenbearbeitungsgerät als Referenz-Grün- und/oder Kulturflächenbearbeitungsgerät und/oder die weitere Fläche als Referenz-Fläche zu bestimmen bzw. zu definieren, insbesondere von Jahr zu Jahr neu.

In einer Weiterbildung, insbesondere einer Ausgestaltung, der Erfindung umfasst bzw. weist die Wachstumskenngröße eine Antriebskenngröße, insbesondere einen Wert der Antriebskenngröße, insbesondere eine Leistungsaufnahme, insbesondere einen Wert der Leistungsaufnahme, und/oder eine der Leistungsaufnahme korrespondierende Größe, insbesondere einen Wert der Größe, eines, insbesondere des, Antriebs, insbesondere eines, insbesondere des, Werkzeugantriebs, eines, insbesondere des und/oder weiteren, Grün- und/oder Kulturflächenbearbeitungsgeräts auf. Zusätzlich oder alternativ umfasst bzw. weist die Wachstumskenngröße eine meteorologische Kenngröße, insbesondere einen Wert der meteorologischen Kenngröße, insbesondere eine Luftfeuchtigkeit, insbesondere einen Wert der Luftfeuchtigkeit, eine Niederschlagsmenge, insbesondere einen Wert der Niederschlagsmenge, eine Lufttemperatur, insbesondere einen Wert der Lufttemperatur, eine Globalstrahlung, insbesondere einen Wert der Globalstrahlung, und/oder eine Albedo, insbesondere einen Wert der Albedo, und/oder eine Bodenkenngröße, insbesondere einen Wert der Bodenkenngröße, insbesondere eine Bodenfeuchtigkeit, insbesondere einen Wert der Bodenfeuchtigkeit, und/oder eine Bodentemperatur, insbesondere einen Wert der Bodentemperatur, auf. Weiter zusätzlich oder alternativ umfasst bzw. weist die Wachstumskenngröße eine, insbesondere meteorologische und/oder phänologische, Jahreszeit, insbesondere einen Wert der Jahreszeit, insbesondere Frühjahr und/oder Herbst, auf. Insbesondere kann die Leistungsaufnahme oder die Größe klein sein, falls das Pflanzenwachstum klein ist bzw. endet. Zusätzlich oder alternativ kann die Leistungsaufnahme oder die Größe groß sein, falls das Pflanzenwachstum groß ist bzw. anfängt. Weiter zusätzlich oder alternativ kann der Wachstumsgrenzwert einen Leistungsaufnahmegrenzwert aufweisen. Weiter zusätzlich oder alternativ kann die Leistungsaufnahme oder die Größe einen Motorstrom und/oder ein Drehmoment, insbesondere einen Drehmomentabruf, aufweisen. Weiter zusätzlich oder alternativ kann der Antrieb einen Fahrantrieb zum Fahren des Grün- und/oder Kulturflächenbearbeitungsgeräts aufweisen, insbesondere sein. Weiter zusätzlich oder alternativ kann das Verfahren, insbesondere den Schritt, aufweisen: Ermitteln, insbesondere Erfassen, einer Position der Fläche, insbesondere des Bereichs der Fläche, und/oder des Grün- und/oder Kulturflächenbearbeitungsgeräts, und Bereitstellen, insbesondere Ermitteln und/oder Empfangen, der meteorologischen Kenngröße und/oder der Bodenkenngröße und/oder der Jahreszeit in Abhängigkeit von bzw. basierend auf der bestimmten Position. Weiter zusätzlich oder alternativ kann das Pflanzenwachstum von der meteorologischen Kenngröße und/oder der Bodenkenngröße und/oder der Jahreszeit beeinflusst und/oder abhängig sein. Weiter zusätzlich oder alternativ kann im Frühjahr das Pflanzenwachstum groß sein bzw. anfangen und/oder im Herbst kann das Pflanzenwachstum klein sein bzw. enden. Weiter zusätzlich oder alternativ kann der Schritt b) aufweisen: Ermitteln der Information und/oder des Pflanzenwachstums in Abhängigkeit von bzw. basierend auf der Antriebskenngröße und/oder der meteorologischen Kenngröße und/oder der Bodenkenngröße und/oder der Jahreszeit, insbesondere miteinander kombiniert bzw. verknüpft. Dies kann ein, insbesondere möglichst, fehlerfreies Ermitteln der Information ermöglichen, z.B. wenn im Sommer wegen Trockenheit das Pflanzenwachstum klein ist, insbesondere und das Grün- und/oder Kulturflächenbearbeitungsgerät nicht abgeholt und/oder der Werkstatt- und/oder Lageraufenthalt nicht anfangen soll. Weiter zusätzlich oder alternativ kann die Wachstumskenngröße, insbesondere können/kann die Antriebskenngröße und/oder die meteorologische Kenngröße und/oder die Bodenkenngröße und/oder die Jahreszeit, gegenwärtig bzw. aktuell, insbesondere wochenaktuell, insbesondere tagesaktuell, sein. Weiter zusätzlich oder alternativ können/kann die meteorologische Kenngröße und/oder die Bodenkenngröße zukünftig bzw. für die Zukunft bzw. eine Vorhersage, insbesondere eine Wettervorhersage, sein.

In einer Weiterbildung der Erfindung wird und/oder ist die Wachstumskenngröße über, insbesondere minimal, mehrere Tage, insbesondere Wochen, insbesondere maximal Wochen, und/oder mehrere Bearbeitungsvorgänge bzw. Bearbeitungen einer, insbesondere der und/oder weiteren, Fläche, insbesondere automatisch, gemittelt. Dies ermöglicht eine hohe Kennzeichnungskraft der Wachstumskenngröße und/oder ein, insbesondere möglichst, fehlerfreies Ermitteln der Information. Insbesondere kann die Wachstumskenngröße über die Fläche, insbesondere den Bereich der Fläche und/oder die weitere Fläche, gemittelt werden und/oder sein.

In einer Weiterbildung der Erfindung umfasst bzw. weist die Information eine Routenführung zu einem Abholungsort für die Abholung und/oder einem Auslieferungsort für die Auslieferung des Grün- und/oder Kulturflächenbearbeitungsgeräts und/oder einen Hinweis, insbesondere einen Wert des Hinweises und/oder ein Datum bzw. einen Zeitpunkt, betreffend den Anfang und/oder das Ende des Werkstatt- und/oder Lageraufenthalts, insbesondere den Anfang, insbesondere einen Wert des Anfangs, und/oder das Ende, insbesondere einen Wert des Endes, des Werkstatt- und/oder Lageraufenthalts, auf. Dies ermöglicht eine Hilfe für einen, insbesondere den, Hol- und/oder Lieferservice, einen, insbesondere den, Werkstatt- und/oder Lagerbetreiber und/oder einen, insbesondere den Nutzer des Grün- und/oder Kulturflächenbearbeitungsgeräts. Insbesondere können der Abholungsort und der Auslieferungsort verschieden sein.

In einer Weiterbildung der Erfindung umfasst bzw. weist das Verfahren, insbesondere den Schritt, auf: Ermitteln, insbesondere automatisches Ermitteln, bzw. Bestimmen einer, insbesondere zeitlichen, Werkstatt-Bearbeitungs- und/oder Auslieferungs-Reihenfolge, insbesondere eines Werts der Werkstatt-Bearbeitungs- und/oder Auslieferungs-Reihenfolge, von Werkstatt-Bearbeitungen und/oder Auslieferungen von Grün- und/oder Kulturflächenbearbeitungsgeräten in Abhängigkeit von, insbesondere entgegengesetzt bzw. umgekehrt zu, einer, insbesondere zeitlichen, Wachstums-Reihenfolge, insbesondere eines Werts der Wachstums-Reihenfolge, eines, insbesondere des, jeweiligen, insbesondere zeitlich, letzten Pflanzenwachstums auf und/oder in mittels der Grün- und/oder Kulturflächenbearbeitungsgeräte bearbeiteten und/oder zu bearbeitenden Flächen und/oder einer, insbesondere zeitlichen, Abholungs-Reihenfolge, insbesondere eines Werts der Abholungs-Reihenfolge, von Abholungen von den Grün- und/oder Kulturflächenbearbeitungsgeräten und/oder einer, insbesondere zeitlichen, Anfangs-Werkstatt- und/oder Lageraufenthalts-Reihenfolge, insbesondere eines Werts der Anfangs-Werkstatt- und/oder Lageraufenthalts-Reihenfolge, von Anfängen von Werkstatt- und/oder Lageraufenthalten von den Grün- und/oder Kulturflächenbearbeitungsgeräten. Dies ermöglicht ein, insbesondere wahrscheinlich, optimales und/oder effizientes Vorgehen. Insbesondere kann die Information die ermittelte Werkstatt-Bearbeitungs- und/oder Auslieferungs-Reihenfolge aufweisen und/oder in Abhängigkeit von bzw. basierend auf dieser ermittelt werden.

Das erfindungsgemäße, insbesondere elektrische, System ist zum, insbesondere zu dem und/oder automatischen, Ermitteln einer, insbesondere der, Information betreffend eine, insbesondere die, Abholung, einen, insbesondere den, Anfang und/oder ein, insbesondere das, Ende eines, insbesondere des, Werkstatt- und/oder Lageraufenthalts und/oder eine, insbesondere die, Auslieferung eines, insbesondere des, Grün- und/oder Kulturflächenbearbeitungsgeräts ausgebildet bzw. konfiguriert. Das System umfasst bzw. weist eine, insbesondere elektrische, Bereitstellungseinrichtung, und eine, insbesondere elektrische, Ermittlungseinrichtung auf. Die Bereitstellungseinrichtung ist zum, insbesondere zu dem und/oder automatischen, Bereitstellen einer, insbesondere der, Wachstumskenngröße ausgebildet bzw. konfiguriert. Die Wachstumskenngröße ist für ein, insbesondere das, Pflanzenwachstum auf und/oder in einer, insbesondere der, mittels des Grün- und/oder Kulturflächenbearbeitungsgeräts bearbeiteten und/oder zu bearbeitenden Fläche kennzeichnend. Die Ermittlungseinrichtung ist zum, insbesondere zu dem und/oder automatischen, Ermitteln der Information in Abhängigkeit von der bereitgestellten Wachstumskenngröße ausgebildet bzw. konfiguriert.

Das System kann mindestens einen Teil oder sogar alle Vorteile wie vorhergehend für das Verfahren genannt ermöglichen.

Insbesondere kann das System zum, insbesondere automatischen, Ausführen eines, insbesondere des, vorhergehend genannten Verfahrens ausgebildet bzw. konfiguriert sein. Zusätzlich oder alternativ kann die Ermittlungseinrichtung eine Recheneinrichtung aufweisen, insbesondere sein. Weiter zusätzlich oder alternativ kann das System eine, insbesondere elektrische, Übertragungs- und/oder Ausgabeeinrichtung zum, insbesondere zu dem, Übertragen und/oder zum, insbesondere zu dem, Ausgeben der ermittelten Information aufweisen. Insbesondere kann die Ausgabeeinrichtung eine Anzeige, insbesondere einen Touchscreen, ein haptisches Display und/oder einen Schallerzeuger aufweisen. Weiter zusätzlich oder alternativ kann das System das Service-Endgerät, das Betreiber-Endgerät und/oder das Nutzer-Endgerät aufweisen. Weiter zusätzlich oder alternativ kann das System und/oder das Nutzer-Endgerät eine, insbesondere elektrische, Eingabevorrichtung zu der Eingabe durch den Nutzer aufweisen. Insbesondere kann die Eingabevorrichtung ein Eingabegerät, insbesondere einen Touchscreen, eine Gestenerkennung, eine Spracherkennung und/oder eine Tastatur aufweisen. Weiter zusätzlich oder alternativ kann das System den Wachstumskenngrößen-Sensor aufweisen.

In einer Weiterbildung umfasst bzw. weist das System das Grün- und/oder Kulturflächenbearbeitungsgerät und/oder eine, insbesondere die und/oder elektrische, Ladestation zum, insbesondere elektrischen, Aufladen des Grün- und/oder Kulturflächenbearbeitungsgeräts, insbesondere mit Antriebsenergie, auf. Insbesondere können/kann das Grün- und/oder Kulturflächenbearbeitungsgerät und/oder die Ladestation, insbesondere jeweils, mindestens teilweise oder sogar vollständig wie vorhergehend für das Verfahren genannt ausgebildet sein. Weiter zusätzlich oder alternativ können/kann das Grün- und/oder Kulturflächenbearbeitungsgerät und/oder die Ladestation, insbesondere jeweils, die Bereitstellungseinrichtung und/oder die Ermittlungseinrichtung, insbesondere und die Übertragungs- und/oder Ausgabeeinrichtung und/oder die Eingabevorrichtung und/oder den Wachstumskenngrößen-Sensor, aufweisen. Weiter zusätzlich oder alternativ kann das System das weitere Grün- und/oder Kulturflächenbearbeitungsgerät aufweisen.

Weiter zusätzlich oder alternativ können/kann das, insbesondere eine, Grün- und/oder Kulturflächenbearbeitungsgerät, das weitere Grün- und/oder Kulturflächenbearbeitungsgerät, der Wachstumskenngrößen-Sensor und/oder die Ladestation, insbesondere jeweils, bei einem, insbesondere dem, Verfahren wie vorhergehend genannt verwendet werden.

### KURZBESCHREIBUNG DER ZEICHNUNGEN

Weitere Vorteile und Aspekte der Erfindung ergeben sich aus den Ansprüchen und aus der Beschreibung von Ausführungsbeispielen der Erfindung, die nachfolgend anhand der Figuren erläutert sind. Dabei zeigen:

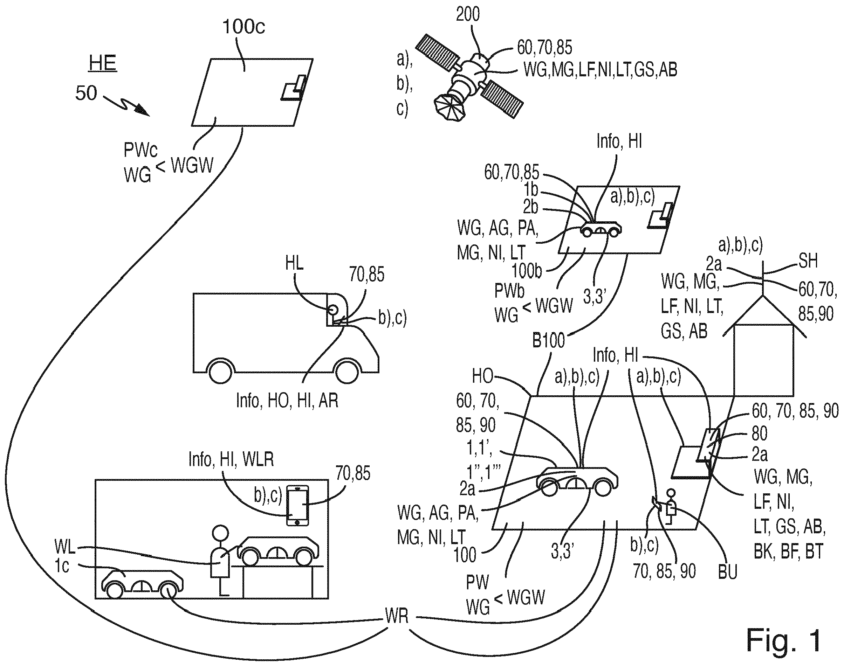

- Fig. 1: eine schematische Ansicht eines erfindungsgemäßen Systems und ein Ablaufdiagramm eines erfindungsgemäßen Verfahrens, insbesondere zum Ermitteln einer Information betreffend eine Abholung und/oder einen Anfang eines Werkstatt- und/oder Lageraufenthalts eines Grün- und/oder Kulturflächenbearbeitungsgeräts, und

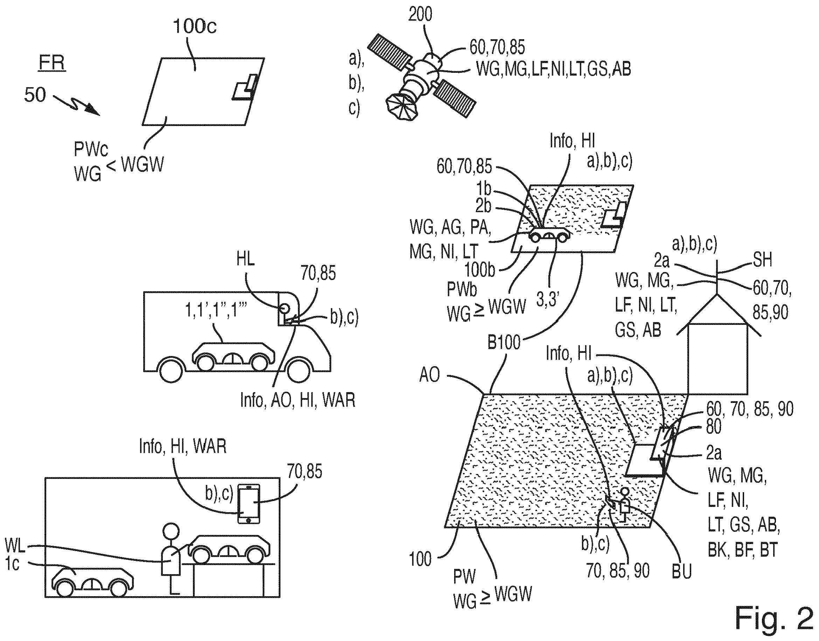

- Fig. 2: eine weitere schematische Ansicht des Systems der Fig. 1 und ein weiteres Ablaufdiagramm des Verfahrens der Fig. 1, insbesondere zum Ermitteln einer Information betreffend ein Ende des Werkstatt- und/oder Lageraufenthalts und/oder eine Auslieferung des Grün- und/oder Kulturflächenbearbeitungsgeräts.

### DETAILLIERTE BESCHREIBUNG DER AUSFÜHRUNGSBEISPIELE

Fig. 1 bis 2 zeigen ein erfindungsgemäßes System 50 und ein erfindungsgemäßes Verfahren zum Ermitteln einer Information Info betreffend eine Abholung, einen Anfang und/oder ein Ende eines Werkstatt- und/oder Lageraufenthalts und/oder eine Auslieferung eines Grün- und/oder Kulturflächenbearbeitungsgeräts 1.

Das System 50 weist, insbesondere mindestens, eine Bereitstellungseinrichtung 60 und, insbesondere mindestens, eine Ermittlungseinrichtung 70 auf. Die Bereitstellungseinrichtung 60 ist zum Bereitstellen einer Wachstumskenngröße WG ausgebildet, insbesondere stellt bereit. Die Wachstumskenngröße WG ist für ein Pflanzenwachstum PW auf und/oder in einer mittels des Grün- und/oder Kulturflächenbearbeitungsgeräts 1 bearbeiteten und/oder zu bearbeitenden Fläche 100 kennzeichnend. Die Ermittlungseinrichtung 70 ist zum Ermitteln der Information Info in Abhängigkeit von der bereitgestellten Wachstumskenngröße WG ausgebildet, insbesondere ermittelt.

Das Verfahren weist die Schritte auf: a) Bereitstellen der Wachstumskenngröße WG, insbesondere mittels der Bereitstellungseinrichtung 60. Die Wachstumskenngröße WG ist für das Pflanzenwachstum PW auf und/oder in der mittels des Grün- und/oder Kulturflächenbearbeitungsgeräts 1 bearbeiteten und/oder zu bearbeitenden Fläche 100 kennzeichnend. b) Ermitteln der Information Info in Abhängigkeit von der bereitgestellten Wachstumskenngröße WG, insbesondere mittels der Ermittlungseinrichtung 70.

In dem gezeigten Ausführungsbeispiel weist das System 50 das Grün- und/oder Kulturflächenbearbeitungsgerät 1 und/oder eine Ladestation 80 zum Aufladen des Grün- und/oder Kulturflächenbearbeitungsgeräts 1 auf. In alternativen Ausführungsbeispielen braucht oder kann das System das Grün- und/oder Kulturflächenbearbeitungsgerät und/oder die Ladestation nicht aufweisen.

Des Weiteren weist in dem gezeigten Ausführungsbeispiel das System 50, insbesondere mindestens, eine Übertragungs- und/oder Ausgabeeinrichtung 85 zum Übertragen und/oder zum Ausgeben der ermittelten Information Info auf.

Außerdem weist das Verfahren den Schritt auf: c) Übertragen und/oder Ausgeben der ermittelten Information Info, insbesondere an einen Hol- und/oder Lieferservice HL, einen Werkstatt- und/oder Lagerbetreiber WL und/oder einen Nutzer BU des Grün- und/oder Kulturflächenbearbeitungsgeräts 1, insbesondere mittels der Übertragungs- und/oder Ausgabeeinrichtung 85.

Im Detail weist das Verfahren auf: Freigeben, Verzögern und/oder Sperren des Übertragens und/oder des Ausgebens der ermittelten Information Info an den Hol- und/oder Lieferservice HL und/oder den Werkstatt- und/oder Lagerbetreiber WL in Abhängigkeit von einer Eingabe durch den Nutzer BU, insbesondere zeitlich nach dem Übertragen und/oder dem Ausgeben der ermittelten Information Info an den Nutzer BU, insbesondere mittels einer Eingabevorrichtung 90, insbesondere des Systems 50.

In dem gezeigten Ausführungsbeispiel wird in Abhängigkeit von der Eingabe durch den Nutzer BU das Übertragen und/oder das Ausgeben der ermittelten Information Info an den Hol- und/oder Lieferservice HL und/oder den Werkstatt- und/oder Lagerbetreiber WL freigegeben.

Weiter weist der Schritt b) auf: Ermitteln der Information Info betreffend die Abholung und/oder den Anfang des Werkstatt- und/oder Lageraufenthalts, falls die bereitgestellte Wachstumskenngröße WG für eine Unterschreitung eines Wachstumsgrenzwerts WGW durch das Pflanzenwachstum PW kennzeichnend ist. Zusätzlich oder alternativ weist der Schritt b) auf: Ermitteln der Information Info betreffend das Ende des Werkstatt- und/oder Lageraufenthalts und/oder die Auslieferung, falls die bereitgestellte Wachstumskenngröße WG für eine Erreichung und/oder eine Überschreitung des Wachstumsgrenzwerts WGW durch das Pflanzenwachstum PW kennzeichnend ist.

In Fig. 1 ist die bereitgestellte Wachstumskenngröße WG für die Unterschreitung des Wachstumsgrenzwerts WGW durch das Pflanzenwachstum PW kennzeichnend, insbesondere unterschreiten/unterschreitet die Wachstumskenngröße WG und/oder das Pflanzenwachstum PW den Wachstumsgrenzwert WGW. Somit wird die Information Info betreffend die Abholung und/oder den Anfang des Werkstatt- und/oder Lageraufenthalts ermittelt.

In Fig. 2 ist die bereitgestellte Wachstumskenngröße WG für die Erreichung und/oder die Überschreitung des Wachstumsgrenzwerts WGW durch das Pflanzenwachstum PW kennzeichnend, insbesondere erreichen/erreicht und/oder überschreiten/überschreitet die Wachstumskenngröße WG und/oder das Pflanzenwachstum PW den Wachstumsgrenzwert WGW. Somit wird die Information Info betreffend das Ende des Werkstatt- und/oder Lageraufenthalts und/oder die Auslieferung ermittelt.

Zudem ist das Grün- und/oder Kulturflächenbearbeitungsgerät 1 ein autonomer mobiler Grün- und/oder Kulturflächenbearbeitungsroboter 1'.

Zusätzlich oder alternativ ist in dem gezeigten Ausführungsbeispiel das Grün- und/oder Kulturflächenbearbeitungsgerät 1 ein Rasenmäher 1", insbesondere ein autonomer mobiler Rasenmähroboter 1'''. In alternativen Ausführungsbeispielen kann das Grün- und/oder Kulturflächenbearbeitungsgerät eine Bodenfräse sein.

In dem gezeigten Ausführungsbeispiel ist die Fläche 100 eine Rasen- bzw. Grasfläche und/oder das Pflanzenwachstum PW ist ein Wachstum einer Größe einer Graspflanze.

Des Weiteren weist der Schritt a) auf: Erfassen der Wachstumskenngröße WG mittels, insbesondere mindestens, eines Wachstumskenngrößen-Sensors 2a, 2b, insbesondere des Systems 50, in einem Bereich B100, insbesondere an und/oder auf und/oder in, der Fläche 100.

In dem gezeigten Ausführungsbeispiel ist ein Wachstumskenngrößen-Sensor 2a Teil eines Smart Homes SH, insbesondere einer Wetterstation des Smart Homes SH, und/oder ein Wachstumskenngrößen-Sensor 2a ist Teil der Ladestation 80.

Außerdem weist der Schritt a) auf: Erfassen der Wachstumskenngröße WG mittels eines, insbesondere des, Wachstumskenngrößen-Sensors 2a, 2b eines, insbesondere des, Grün- und/oder Kulturflächenbearbeitungsgeräts 1, insbesondere auf und/oder in der Fläche 100.

Im Detail weist der Schritt a) auf: Erfassen der Wachstumskenngröße WG mittels des Wachstumskenngrößen-Sensors 2b eines weiteren Grün- und/oder Kulturflächenbearbeitungsgeräts 1b, insbesondere auf und/oder in einer weiteren Fläche 100b in dem Bereich B100 der Fläche 100. Insbesondere weist der Schritt b) auf: Ermitteln der Information Info, insbesondere betreffend das Ende des Werkstatt- und/oder Lageraufenthalts und/oder die Auslieferung, in Abhängigkeit von der erfassten Wachstumskenngröße WG, wie in Fig. 2 gezeigt.

In dem gezeigten Ausführungsbeispiel ist ein Wachstumskenngrößen-Sensor 2a Teil des, insbesondere einen, Grün- und/oder Kulturflächenbearbeitungsgeräts 1 und/oder ein Wachstumskenngrößen-Sensor 2b ist Teil des weiteren Grün- und/oder Kulturflächenbearbeitungsgeräts 1b.

Weiter weist in dem gezeigten Ausführungsbeispiel das System 50 das weitere Grün- und/oder Kulturflächenbearbeitungsgerät 1b auf. In alternativen Ausführungsbeispielen braucht oder kann das System das weitere Grün- und/oder Kulturflächenbearbeitungsgerät nicht aufweisen.

Im Detail wurde mittels des Wachstumskenngrößen-Sensors 2b des weiteren Grün- und/oder Kulturflächenbearbeitungsgeräts 1b ein Pflanzenwachstum PWb erfasst nachdem mittels des Wachstumskenngrößen-Sensors 2a des Grün- und/oder Kulturflächenbearbeitungsgeräts 1 ein kleineres oder kein Pflanzenwachstum erfasst wurde, wie in Fig. 1 gezeigt. Somit werden/wird das weitere Grün- und/oder Kulturflächenbearbeitungsgerät 1b als Referenz-Grün- und/oder Kulturflächenbearbeitungsgerät und/oder die weitere Fläche 100b als Referenz-Fläche bestimmt bzw. zu definiert.

Zudem weist die Wachstumskenngröße WG eine Antriebskenngröße AG, insbesondere eine Leistungsaufnahme PA und/oder eine der Leistungsaufnahme korrespondierende Größe, eines Antriebs 3, insbesondere eines Werkzeugantriebs 3', eines, insbesondere des und/oder weiteren, Grün- und/oder Kulturflächenbearbeitungsgeräts 1, 1b auf.

Zusätzlich oder alternativ weist die Wachstumskenngröße WG eine meteorologische Kenngröße MG, insbesondere eine Luftfeuchtigkeit LF, eine Niederschlagsmenge NI, eine Lufttemperatur LT, eine Globalstrahlung GS und/oder eine Albedo AB, und/oder eine Bodenkenngröße BK, insbesondere eine Bodenfeuchtigkeit BF und/oder eine Bodentemperatur BT, auf.

Weiter zusätzlich oder alternativ weist die Wachstumskenngröße WG eine, insbesondere meteorologische und/oder phänologische, Jahreszeit MPJ, insbesondere Frühjahr FR und/oder Herbst HE, auf.

In Fig. 1 ist die Jahreszeit MPJ Herbst HE.

In Fig. 2 ist die Jahreszeit MPJ Frühjahr FR.

In dem gezeigten Ausführungsbeispiel wird die Wachstumskenngröße WG aufweisend die Antriebskenngröße AG und/oder die meteorologische Kenngröße MG mittels des Wachstumskenngrößen-Sensors 2a des, insbesondere einen, Grün- und/oder Kulturflächenbearbeitungsgeräts 1 und/oder des Wachstumskenngrößen-Sensors 2b des weiteren Grün- und/oder Kulturflächenbearbeitungsgeräts 1b erfasst. Insbesondere kann eine Häufung von Aufwärmvorgängen des Grün- und/oder Kulturflächenbearbeitungsroboters 1' an der Ladestation ein Indiz für ein kleines oder kein Pflanzenwachstum sein. Insbesondere dies vor dem Hintergrund, dass bei kühler Witterung der Grün- und/oder Kulturflächenbearbeitungsroboter 1' sich an der Ladestation 80 aufwärmen muss, insbesondere bevor er, insbesondere wieder, losfährt.

Des Weiteren wird die Wachstumskenngröße WG aufweisend die meteorologische Kenngröße MG und/oder die Bodenkenngröße BK mittels des Wachstumskenngrößen-Sensors 2a der Ladestation 80 erfasst.

Außerdem wird die wird die Wachstumskenngröße WG aufweisend die meteorologische Kenngröße MG mittels des Wachstumskenngrößen-Sensors 2a des Smart Homes SH erfasst.

Weiter wird die Wachstumskenngröße WG aufweisend die meteorologische Kenngröße MG mittels eines Wetterdienstes 200 erfasst und/oder bereitgestellt.

Zudem ist die Antriebskenngröße AG aktuell, und/oder die meteorologische Kenngröße MG ist aktuell und/oder zukünftig, insbesondere eine Wettervorhersage, und/oder die Bodenkenngröße BK ist aktuell und/oder zukünftig.

Des Weiteren weist der Schritt b) auf: Ermitteln der Information Info und/oder des Pflanzenwachstums PW in Abhängigkeit von der Antriebskenngröße AG und/oder der meteorologischen Kenngröße MG und/oder der Bodenkenngröße BK und/oder der Jahreszeit MPJ, insbesondere miteinander kombiniert bzw. verknüpft, insbesondere und Ermitteln der Information Info in Abhängigkeit von dem ermittelten Pflanzenwachstum PW.

In alternativen Ausführungsbeispielen braucht oder kann die Wachstumskenngröße nur einen Teil bzw. nicht alle der vorhergehend genannten Kenngrößen aufweisen.

Zusätzlich oder alternativ kann in alternativen Ausführungsbeispielen die Wachstumskenngröße, insbesondere entweder, mittels des Wachstumskenngrößen-Sensors des, insbesondere einen, Grün- und/oder Kulturflächenbearbeitungsgeräts oder des Wachstumskenngrößen-Sensors des weiteren Grün- und/oder Kulturflächenbearbeitungsgeräts oder des Wachstumskenngrößen-Sensors der Ladestation oder des Wachstumskenngrößen-Sensors des Smart Homes oder des Wetterdienstes erfasst und/oder bereitgestellt werden.

Außerdem wird und/oder ist die Wachstumskenngröße WG über mehrere Tage, insbesondere Wochen, und/oder mehrere Bearbeitungsvorgänge einer, insbesondere der und/oder weiteren, Fläche 100, 100b gemittelt, insbesondere mittels der Ermittlungseinrichtung 70. Insbesondere wird und/oder ist die Wachstumskenngröße WG über die Fläche 100, insbesondere den Bereich der Fläche B100 und/oder die weitere Fläche 100b, gemittelt, insbesondere mittels der Ermittlungseinrichtung 70.

Weiter weist die die Information Info eine Routenführung zu einem Abholungsort HO für die Abholung und/oder einem Auslieferungsort AO für die Auslieferung des Grün- und/oder Kulturflächenbearbeitungsgeräts 1 und/oder einen Hinweis HI betreffend den Anfang und/oder das Ende des Werkstatt- und/oder Lageraufenthalts auf.

Insbesondere können das Grün- und/oder Kulturflächenbearbeitungsgerät 1 und das weitere Grün- und/oder Kulturflächenbearbeitungsgerät 1b, insbesondere und mindestens ein weiteres Grün- und/oder Kulturflächenbearbeitungsgerät 1 des Bereichs B100, gemeinsam abgeholt werden.

Zusätzlich oder alternativ kann das Referenz-Grün- und/oder Kulturflächenbearbeitungsgerät, in dem gezeigten Ausführungsbeispiel das weitere Grün- und/oder Kulturflächenbearbeitungsgerät 1b, insbesondere zeitlich vor, dem Grün- und/oder Kulturflächenbearbeitungsgerät 1 ausgeliefert werden.

Weiter zusätzlich oder alternativ kann das Nicht-Referenz-Grün- und/oder Kulturflächenbearbeitungsgerät, in dem gezeigten Ausführungsbeispiel das, insbesondere eine, Grün- und/oder Kulturflächenbearbeitungsgerät 1, insbesondere und mindestens ein weiteres Grün- und/oder Kulturflächenbearbeitungsgerät 1 des Bereichs B100 gemeinsam, ausgeliefert werden.

Weiter zusätzlich oder alternativ können die Abholungen, die Anfänge und/oder die Enden der Werkstatt- und/oder Lageraufenthalte und/oder die Auslieferungen des Grün- und/oder Kulturflächenbearbeitungsgeräts 1 und eines anderen Grün- und/oder Kulturflächenbearbeitungsgeräts 1c zu verschiedenen Daten bzw. Zeitpunkten bzw., insbesondere zeitlich, verschieden bzw. verteilt sein. Insbesondere kann eine andere Fläche 100c nicht in dem Bereich B100 bzw. entfernt von der Fläche 100 mittels des anderen Grün- und/oder Kulturflächenbearbeitungsgeräts 1c bearbeitet und/oder zu bearbeiten sein.

Zudem weist das Verfahren auf: Ermitteln einer Werkstatt-Bearbeitungs- und/oder Auslieferungs-Reihenfolge WAR von Werkstatt-Bearbeitungen und/oder Auslieferungen von Grün- und/oder Kulturflächenbearbeitungsgeräten 1 in Abhängigkeit von, insbesondere entgegengesetzt zu, einer Wachstums-Reihenfolge WR eines jeweiligen letzten Pflanzenwachstums PW auf und/oder in mittels der Grün- und/oder Kulturflächenbearbeitungsgeräte 1 bearbeiteten und/oder zu bearbeitenden Flächen 100 und/oder einer Abholungs-Reihenfolge AR von Abholungen von den Grün- und/oder Kulturflächenbearbeitungsgeräten 1 und/oder einer Anfangs-Werkstatt- und/oder Lageraufenthalts-Reihenfolge WLR von Anfängen von Werkstatt- und/oder Lageraufenthalten von den Grün- und/oder Kulturflächenbearbeitungsgeräten 1, insbesondere mittels der Ermittlungseinrichtung 70. Insbesondere weist die Information Info die ermittelte Werkstatt-Bearbeitungs- und/oder Auslieferungs-Reihenfolge WAR auf und/oder wird in Abhängigkeit von dieser ermittelt.

In dem gezeigten Ausführungsbeispiel weisen/weist das Grün- und/oder Kulturflächenbearbeitungsgerät 1 und/oder die Ladestation 80 und/oder das Smart Home SH, insbesondere jeweils, die Bereitstellungseinrichtung 60 und/oder die Ermittlungseinrichtung 70 und/oder die Übertragungs- und/oder Ausgabeeinrichtung 85 und/oder die Eingabevorrichtung 90 auf.

Zusätzlich oder alternativ weist ein Nutzer-Endgerät des Nutzers BU, insbesondere ein mobiles bzw. portables Endgerät, wie z.B. ein Smartphone oder ein Tablet oder eine Smartwatch, die Ermittlungseinrichtung 70 und/oder die Übertragungs- und/oder Ausgabeeinrichtung 85 und/oder die Eingabevorrichtung 90 auf.

Weiter zusätzlich oder alternativ weisen/weist ein Service-Endgerät des Hol- und/oder Lieferservice HL, insbesondere ein mobiles bzw. portables Endgerät, wie z.B. ein Smartphone oder ein Tablet oder eine Smartwatch, und/oder ein Betreiber-Endgerät des Werkstatt- und/oder Lagerbetreibers WL, insbesondere ein mobiles bzw. portables Endgerät, wie z.B. ein Smartphone oder ein Tablet oder eine Smartwatch, oder ein stationäres Endgerät, wie z.B. einen PC, insbesondere jeweils, die Ermittlungseinrichtung 70 und/oder die Übertragungs- und/oder Ausgabeeinrichtung 85 auf.

Weiter zusätzlich oder alternativ weist das weitere Grün- und/oder Kulturflächenbearbeitungsgerät 1b die Bereitstellungseinrichtung 60 und/oder die Ermittlungseinrichtung 70 und/oder die Übertragungs- und/oder Ausgabeeinrichtung 85 auf.

Weiter zusätzlich oder alternativ kann der Wetterdienst 200 die Bereitstellungseinrichtung 60 und/oder die Ermittlungseinrichtung 70 und/oder die Übertragungs- und/oder Ausgabeeinrichtung 85 aufweisen.

In alternativen Ausführungsbeispielen kann, insbesondere entweder, das Grün- und/oder Kulturflächenbearbeitungsgerät oder die Ladestation oder das Smart Home oder das Nutzer-Endgerät oder das Service-Endgerät oder das Betreiber-Endgerät oder das weitere Grün- und/oder Kulturflächenbearbeitungsgerät oder der Wetterdienst die Bereitstellungseinrichtung und/oder die Ermittlungseinrichtung und/oder die Übertragungs- und/oder Ausgabeeinrichtung und/oder die Eingabevorrichtung aufweisen.

Des Weiteren sind in dem gezeigten Ausführungsbeispiel das Grün- und/oder Kulturflächenbearbeitungsgerät 1 und/oder die Ladestation 80 und/oder das Smart Home SH und/oder der Nutzer BU bzw. das Nutzer-Endgerät und/oder der Hol- und/oder Lieferservice HL bzw. das Service-Endgerät und/oder der Werkstatt- und/oder Lagerbetreiber WL bzw. das Betreiber-Endgerät und/oder das weitere Grün- und/oder Kulturflächenbearbeitungsgerät 1b und/oder der Wetterdienst 200 und/oder die Bereitstellungseinrichtung 60 und/oder die Ermittlungseinrichtung 70 und/oder die Übertragungs- und/oder Ausgabeeinrichtung 85 und/oder die Eingabevorrichtung 90 zum Zusammenwirken, insbesondere zum Kommunizieren, miteinander, insbesondere zum Übertragen, insbesondere der, insbesondere bereitgestellten und/oder erfassten, Wachstums-Kenngröße WG und/oder des Pflanzenwachstums PW und/oder der, insbesondere ermittelten, Information Info und/oder der Eingabe, ausgebildet, insbesondere wirken zusammen. Insbesondere kann das Zusammenwirken über eine Cloud bzw. von Cloud zu Cloud sein. Zusätzlich oder alternativ kann die Wachstums-Kenngröße WG und/oder das Pflanzenwachstum PW und/oder die Information Info und/oder die Eingabe von dem Grün- und/oder Kulturflächenbearbeitungsgerät 1 zu der Ladestation 80 drahtgebunden übertragen werden und/oder von der Ladestation 80 in die Cloud drahtlos übertragen werden. Weiter zusätzlich oder alternativ kann im Nahbereich und/oder in dem Bereich B100 drahtlos übertragen werden, insbesondere über WLAN und/oder Bluetooth, und/oder im Fernbereich kann drahtlos, insbesondere über Mobilfunk, wie z.B. GSM, UMTS und/oder LTE, übertragen werden.

Das Ausgeben kann gemäß einem Rechte- und Rollenkonzept ausgeführt werden, insbesondere über die Cloud, wie z.B. eine Hersteller-Cloud. Insbesondere kann das Rechte- und Rollenkonzept ermöglichen, dass alle an der Erbringung des Service Beteiligten, insbesondere der Nutzer BU, der Hol- und/oder Lieferservice HL und/oder der Werkstatt- und/oder Lagerbetreiber WL, insbesondere jeweils, die für sie relevanten Daten einsehen/nutzen können.

Wie die gezeigten und oben erläuterten Ausführungsbeispiele deutlich machen, stellt die Erfindung ein vorteilhaftes Verfahren und ein vorteilhaftes System, insbesondere jeweils, zum Ermitteln einer Information betreffend eine Abholung, einen Anfang und/oder ein Ende eines Werkstatt- und/oder Lageraufenthalts und/oder eine Auslieferung eines Grün- und/oder Kulturflächenbearbeitungsgeräts bereit, das, insbesondere jeweils, verbesserte Eigenschaften und/oder verbesserte Funktionalitäten aufweist.

## Patentansprüche

1. Verfahren zum Ermitteln einer Information (Info) betreffend eine Abholung, einen Anfang und/oder ein Ende eines Werkstatt- und/oder Lageraufenthalts und/oder eine Auslieferung eines Grün- und/oder Kulturflächenbearbeitungsgeräts (1), wobei das Verfahren die Schritte aufweist:
a) Bereitstellen einer Wachstumskenngröße (WG), wobei die Wachstumskenngröße (WG) für ein Pflanzenwachstum (PW) auf und/oder in einer mittels des Grün- und/oder Kulturflächenbearbeitungsgeräts (1) bearbeiteten und/oder zu bearbeitenden Fläche (100) kennzeichnend ist, und
b) Ermitteln der Information (Info) in Abhängigkeit von der bereitgestellten Wachstumskenngröße (WG).

2. Verfahren nach Anspruch 1, wobei das Verfahren den Schritt aufweist:
c) Übertragen und/oder Ausgeben der ermittelten Information (Info), insbesondere an einen Hol- und/oder Lieferservice (HL), einen Werkstatt- und/oder Lagerbetreiber (WL) und/oder einen Nutzer (BU) des Grün- und/oder Kulturflächenbearbeitungsgeräts (1).

3. Verfahren nach Anspruch 2, wobei das Verfahren aufweist:
- Freigeben, Verzögern und/oder Sperren des Übertragens und/oder des Ausgebens der ermittelten Information (Info) an den Hol- und/oder Lieferservice (HL) und/oder den Werkstatt- und/oder Lagerbetreiber (WL) in Abhängigkeit von einer Eingabe durch den Nutzer (BU), insbesondere zeitlich nach dem Übertragen und/oder dem Ausgeben der ermittelten Information (Info) an den Nutzer (BU).

4. Verfahren nach einem der vorhergehenden Ansprüche,
- wobei der Schritt b) aufweist: Ermitteln der Information (Info) betreffend die Abholung und/oder den Anfang des Werkstatt- und/oder Lageraufenthalts, falls die bereitgestellte Wachstumskenngröße (WG) für eine Unterschreitung eines Wachstumsgrenzwerts (WGW) durch das Pflanzenwachstum (PW) kennzeichnend ist, und/oder
- wobei der Schritt b) aufweist: Ermitteln der Information (Info) betreffend das Ende des Werkstatt- und/oder Lageraufenthalts und/oder die Auslieferung, falls die bereitgestellte Wachstumskenngröße (WG) für eine Erreichung und/oder eine Überschreitung eines, insbesondere des, Wachstumsgrenzwerts (WGW) durch das Pflanzenwachstum (PW) kennzeichnend ist.

5. Verfahren nach einem der vorhergehenden Ansprüche,
- wobei das Grün- und/oder Kulturflächenbearbeitungsgerät (1) ein autonomer mobiler Grün- und/oder Kulturflächenbearbeitungsroboter (1') ist, und/oder
- wobei das Grün- und/oder Kulturflächenbearbeitungsgerät (1) ein Rasenmäher (1"), insbesondere ein autonomer mobiler Rasenmähroboter (1"'), und/oder eine Bodenfräse ist.

6. Verfahren nach einem der vorhergehenden Ansprüche,
- wobei der Schritt a) aufweist: Erfassen der Wachstumskenngröße (WG) mittels eines Wachstumskenngrößen-Sensors (2a, 2b) in einem Bereich (B100), insbesondere an und/oder auf und/oder in, der Fläche (100).

7. Verfahren nach einem der vorhergehenden Ansprüche, insbesondere nach Anspruch 6,
- wobei der Schritt a) aufweist: Erfassen der Wachstumskenngröße (WG) mittels eines, insbesondere des, Wachstumskenngrößen-Sensors (2a, 2b) eines, insbesondere des, Grün- und/oder Kulturflächenbearbeitungsgeräts (1), insbesondere auf und/oder in der Fläche (100).

8. Verfahren nach Anspruch 7, und insbesondere Anspruch 6,
- wobei der Schritt a) aufweist: Erfassen der Wachstumskenngröße (WG) mittels des Wachstumskenngrößen-Sensors (2b) eines weiteren Grün- und/oder Kulturflächenbearbeitungsgeräts (1b), insbesondere auf und/oder in einer weiteren Fläche (100b) in dem Bereich (B100) der Fläche (100),
- und insbesondere wobei der Schritt b) aufweist: Ermitteln der Information (Info), insbesondere betreffend das Ende des Werkstatt- und/oder Lageraufenthalts und/oder die Auslieferung, in Abhängigkeit von der erfassten Wachstumskenngröße (WG).

9. Verfahren nach Anspruch 8,
- wobei mittels des Wachstumskenngrößen-Sensors (2b) des weiteren Grün- und/oder Kulturflächenbearbeitungsgeräts (1b) ein Pflanzenwachstum (PWb) erfasst wurde nachdem mittels eines Wachstumskenngrößen-Sensors (2a) des Grün- und/oder Kulturflächenbearbeitungsgeräts (1) ein kleineres oder kein Pflanzenwachstum (PWa) erfasst wurde.

10. Verfahren nach einem der vorhergehenden Ansprüche, insbesondere nach einem der Ansprüche 7 bis 9,
- wobei die Wachstumskenngröße (WG) eine Antriebskenngröße (AG), insbesondere eine Leistungsaufnahme (PA) und/oder eine der Leistungsaufnahme korrespondierende Größe, eines Antriebs (3), insbesondere eines Werkzeugantriebs (3'), eines, insbesondere des, Grün- und/oder Kulturflächenbearbeitungsgeräts (1) aufweist, und/oder
- wobei die Wachstumskenngröße (WG) eine meteorologische Kenngröße (MG), insbesondere eine Luftfeuchtigkeit (LF), eine Niederschlagsmenge (NI), eine Lufttemperatur (LT), eine Globalstrahlung (GS) und/oder eine Albedo (AB), und/oder eine Bodenkenngröße (BK), insbesondere eine Bodenfeuchtigkeit (BF) und/oder eine Bodentemperatur (BT), aufweist, und/oder
- wobei die Wachstumskenngröße (WG) eine, insbesondere meteorologische und/oder phänologische, Jahreszeit (MPJ), insbesondere Frühjahr (FR) und/oder Herbst (HE), aufweist.

11. Verfahren nach einem der vorhergehenden Ansprüche,
- wobei die Wachstumskenngröße (WG) über mehrere Tage (d), insbesondere Wochen (w), und/oder mehrere Bearbeitungsvorgänge einer, insbesondere der, Fläche (100) gemittelt wird und/oder ist.

12. Verfahren nach einem der vorhergehenden Ansprüche,
- wobei die Information (Info) eine Routenführung zu einem Abholungsort (HO) für die Abholung und/oder einem Auslieferungsort (AO) für die Auslieferung des Grün- und/oder Kulturflächenbearbeitungsgeräts (1) und/oder einen Hinweis (HI) betreffend den Anfang und/oder das Ende des Werkstatt- und/oder Lageraufenthalts aufweist.

13. Verfahren nach einem der vorhergehenden Ansprüche, wobei das Verfahren aufweist:
- Ermitteln einer Werkstatt-Bearbeitungs- und/oder Auslieferungs-Reihenfolge (WAR) von Werkstatt-Bearbeitungen und/oder Auslieferungen von Grün- und/oder Kulturflächenbearbeitungsgeräten (1) in Abhängigkeit von, insbesondere entgegengesetzt zu, einer Wachstums-Reihenfolge (WR) eines jeweiligen letzten Pflanzenwachstums (PW) auf und/oder in mittels der Grün- und/oder Kulturflächenbearbeitungsgeräte (1) bearbeiteten und/oder zu bearbeitenden Flächen (100) und/oder einer Abholungs-Reihenfolge (AR) von Abholungen von den Grün- und/oder Kulturflächenbearbeitungsgeräten (1) und/oder einer Anfangs-Werkstatt- und/oder Lageraufenthalts-Reihenfolge (WLR) von Anfängen von Werkstatt- und/oder Lageraufenthalten von den Grün- und/oder Kulturflächenbearbeitungsgeräten (1).

14. System (50) zum Ermitteln einer Information (Info) betreffend eine Abholung, einen Anfang und/oder ein Ende eines Werkstatt- und/oder Lageraufenthalts und/oder eine Auslieferung eines Grün- und/oder Kulturflächenbearbeitungsgeräts (1), insbesondere zum Ausführen eines Verfahrens nach einem der vorhergehenden Ansprüche, wobei das System (50) aufweist:
- eine Bereitstellungseinrichtung (60), wobei die Bereitstellungseinrichtung (60) zum Bereitstellen einer Wachstumskenngröße (WG) ausgebildet ist, wobei die Wachstumskenngröße (WG) für ein Pflanzenwachstum (PW) auf und/oder in einer mittels des Grün- und/oder Kulturflächenbearbeitungsgeräts (1) bearbeiteten und/oder zu bearbeitenden Fläche (100) kennzeichnend ist, und
- eine Ermittlungseinrichtung (70), wobei die Ermittlungseinrichtung (70) zum Ermitteln der Information (Info) in Abhängigkeit von der bereitgestellten Wachstumskenngröße (WG) ausgebildet ist.

15. System (50) nach Anspruch 14, wobei das System (50) aufweist:
- das Grün- und/oder Kulturflächenbearbeitungsgerät (1) und/oder eine Ladestation (80) zum Aufladen des Grün- und/oder Kulturflächenbearbeitungsgeräts (1).
